# EUROPEAN PATENT SPECIFICATION

(11) **EP 1 632 061 B1**
(45) Date of publication and mention of the grant of the patent: **03.10.2007**
(21) Application number: 04753996.0
(22) Date of filing: 03.06.2004
(51) Int. Cl.: H04L 12/56

(54) **SYSTEM AND METHOD FOR COMMUNICATION OVER A BUS**
SYSTEM UND VERFAHREN ZUR KOMMUNIKATION ÜBER EINEN BUS
SYSTEME ET PROCEDE DE TRANSMISSION SUR UN BUS

(30) Priority: 03.06.2003 US 475561 P
(43) Date of publication of application: 08.03.2006
(73) Proprietor: Starent Networks Corporation, Tewsbury, MA 02420-1325 (US)
(72) Inventor: ESHRAGHIAN, Hamed, Lexington, MA 02420-1325 (US)
(74) Representative: Palmer, Jonathan R.
(86) International application number: PCT/US2004/017288
(87) International publication number: WO 2004/109530

(56) References cited:
- CSIX: "CSIX-L1: Common Switch Interface Specification-L1" INTERNET ARTICLE, [Online] 8 May 2000 (2000-05-08), XP002316734 PALO ALTO, CA USA Retrieved from the Internet: URL:http://www.npforum.org/csixL1.pdf> [retrieved on 2005-02-08]

## Description

### TECHNICAL FIELD

The present application relates to systems and methods for exchanging electrical signals, and in particular to the communication of digital information between two or more electronic components over a communication bus.

### BACKGROUND

Electrical and electronic circuits and systems, and elements thereof, exchange electrical signals. The signals can be in analog form, generally signified by a magnitude of some characteristic of the signal, e.g. voltage. Alternately, the signals can be in digital form, signified by discrete values of the signal, e.g. binary signals (0/1, +1/-1, high/low, etc.).

Modem electronic systems commonly exchange digital information over conducting lines or wires, often arranged in groups, called buses. A bus can contain any number of conducting lines, and can be formed by grouping the conducting lines physically or logically. Buses can be produced in bundles, braids, or flat ribbons, and can have endpoint connectors or terminators suitable for making contact between the components coupled by the buses. Buses can also be produced by laying out solder lines on an electronic circuit board, or by etching conductive traces into a semiconducting substrate. When packaged in a chip, buses can be manufactured along with the chip in the package.

One communication bus provided by the Common Switch Interface Consortium is known as the CSIX bus, used in network processors. The CSIX bus provides lines for data communication, including header information, a Ready bit, and vertical parity checking bits. Another available communication bus is the proprietary Focus bus from Vitesse Semiconductor Corporation. The Focus bus provides data lines, header information, but no Ready bit or vertical parity information. Both the CSIX and Focus buses require flow control data to be exchanged outside the buses, on separate lines, which consume valuable bus and pin locations. The CSIX bus requires start-of-frame (SOF) and parity (PAR) lines in addition to clock and data lines. The Focus bus requires flow control lines in addition to clock and data lines.

As features, functions, and communication bandwidths multiply, it becomes helpful or necessary to optimize or efficiently make use of the communication buses in electronic systems and devices. Accordingly, data is usually packaged and delivered in a way that leaves as much bandwidth over the buses available as possible while still achieving the desired function.

One way to address the problem of limited bus connections might be to increase the number of communication data lines (lines) in the buses. However, this would require a corresponding increase in the number of connecting pins coupling the devices to the buses, and would also require a corresponding modification to the communication protocols, memory array sizes, communication software, clock regulation, and other design factors. Furthermore, increasing the size of communication buses results in buses and devices that are significantly larger in physical area (footprint) and cost. Therefore, it is useful to develop new systems and techniques that reduce the need for added buswork and connections, and efficiently utilize the lines and pin connections of existing systems.
Document "CSIX-L1: Common Switch Interface Specification - L1", 8 May 2000, an Internet Article retrievable from http://www.npforum.org/csixL1.pdf discloses the definition of the CSIX-L1 interface between a Traffic Manager and a Switch Fabric for ATM, IP, MPLS, Ethernet and similar data communications applications.

### SUMMARY

There is provided a method for transmitting from a first device over a bus as set out in claim 1, and a system for transmitting from a first device as set out in claim 6.

Recognizing at least the points mentioned above, and appreciating solutions to the challenges presented by modem digital bus communications, new systems and methods for communicating over buses are described. In some aspects, the buses provide improved bus availability, bandwidth, and performance by utilizing common clock signals instead of conventional clock sourcing. In other aspects, the buses use useful and new cell formats that enable devices to exchange information and payloads in a streamlined fashion within existing hardware limitations that are less prone to error. In some specific embodiments, a bus and method for using the same is provided to satisfy the "F8" bus used in the ST-16 intelligent mobile gateway device from Starent Networks of Tewksbury, Mass. , or similar devices. More generically, the present buses and methods may be used with any compatible or adaptable components, the digital communication and signal processing types being only one example thereof.

One embodiment of the present disclosure is directed to a method for exchanging digital data between devices over a bus, including providing at least one bit of data to indicate the type of digital data being exchanged; providing at least one bit of data to indicate whether a device coupled to the bus is ready to communicate with other devices over the bus; and providing at least one vertical parity bit for checking for error conditions in corresponding bits of the digital data.

Another embodiment of the present disclosure is directed to a system for transferring digital data between at least two devices, including a communication bus having a plurality of communication lines, the communication bus coupled at a first end thereof to a first device and coupled at a second end thereof to a second device; at least one of the plurality of communication lines carrying a bit of data to indicate the type of digital data being exchanged; at least one of the plurality of communication lines carrying a bit of data to indicate whether a device coupled to the communication bus is ready to communicate with other devices over the communication bus; and the plurality of communication lines carrying vertical parity bits for checking for error conditions in corresponding bits of the digital data.

### BRIEF DESCRIPTION OF THE DRAWINGS

For a fuller understanding of the nature and objects of the present disclosure, reference should be made to the following detailed description, in connection with the accompanying drawings, in which the same reference numerals are used to indicate the same or similar parts, wherein:
Figure 1 illustrates an exemplary grouping of FPGA circuits arranged on a motherboard and interconnected by communication buses;
Figure 2 illustrates an 8-bit byte of a data cell, with notation for numbering the bits;
Figure 3 illustrates an exemplary F8 cell format, showing the information contained in each byte and bit of the cell;
Figure 4 illustrates the operation of vertical parity in a data cell;
Figure 5 illustrates data blocks within an exemplary F8 data cell, including payload cells; and
Figure 6 illustrates a null cell.

### DETAILED DESCRIPTION

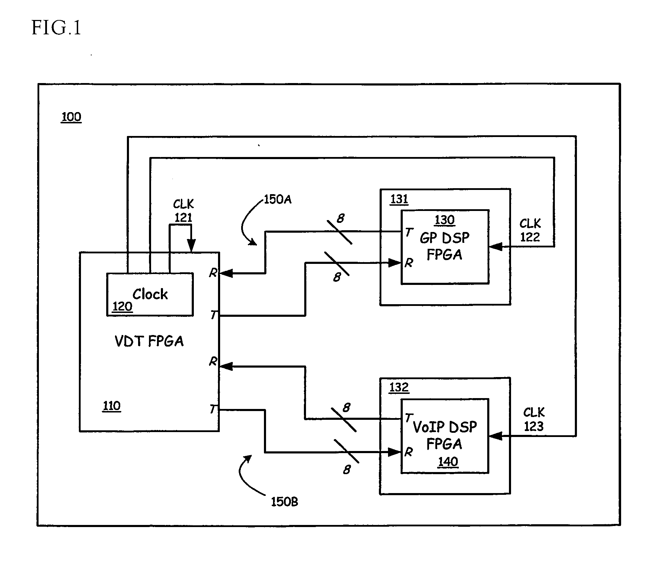

Figure 1 illustrates an exemplary motherboard 100 having various logic chips, circuits, and communication elements coupled thereto. Motherboard 100 is typically provided with connection pins (not shown) that deliver power, ground connections, data, and control signals between the motherboard and a computer system in which the motherboard is installed. The computer system may be local and has motherboard 100 installed into a hardware slot designed for such cards. The computer system may be also be remote or distributed such that motherboard 100 and the computer system are not in physical proximity to one another.

The motherboard 100 of Figure 1 includes a voice data transport (VDT) field programmable gate array (FPGA) chip 110 that manages aspects of delivery and processing of information from voice communication sessions. Two other FPGAs are disposed on motherboard 100: a general purpose digital signal processing (GP DSP) chip 130 and a voice over internet protocol digital signal processing (VoIP DSP) chip 140. The chips in this example are constructed as packaged integrated circuits (ICs) and are generally mounted on cards or daughter boards, e.g. 131, 132, which themselves are electrically and/or mechanically coupled to motherboard 100, but the FPGAs may also be placed directly onto appropriate mating connections on motherboard 100.

Each of the FPGAs 130 and 140 are connected to FPGA 110 by "F8" communication bus lines 150. An F8 bus has 16 total lines, consisting of 8 lines for receiving data, and another 8 lines for transmitting data. This is indicated by the slash symbols accompanying the numerals "8" in the figures, as well as the directionality of the arrows and the letters "R" (receive) and "T" (transmit). F8 bus 150A connects VDT 110 and GP DSP 130, while F8 bus 150B connects VDT 110 and VoIP DSP 140. Of course, not all buses connecting the various components need to be of the same design or of the F8 type, but rather, it is possible to have a variety of bus types represented on a single board or system if appropriate.

This system of integrated circuits and associated computing components provides the ability to receive, process, store, and retransmit digital data from a variety of sources and in one or more formats. For example, the circuits may be used to handle voice and data communication in internet protocol (IP), asynchronous transfer mode (ATM), or time division multiplexing (TDM) applications.

One feature, of one aspect of the invention, shown in Figure 1 is a shared clock feature. A clock source, usually a solid state resonator crystal 120 is powered from some source of power on a daughter board or a motherboard 110. The clock 120 generates a cyclical (CLK) signal suitable for actuating and synchronizing other parts of the system. In the exemplary embodiment shown, the clock signal is delivered to the FPGAs 110, 130, and 140 through clock lines 121, 122, and 123, respectively. The clock signals to all of the FPGAs are thus shared from their source 120 and will be substantially synchronized (having contemporaneous rising and falling edges).

In some instances, the present system of sharing a common clock signal is preferable to conventional clock sourcing. In conventional clock sourcing, a clock signal is generated at a clock and then passed to a first circuit. The first circuit in turn passes on a clock signal to a second circuit, which may pass a clock signal to a third, and so on. Clock sourcing works by a two-way (back and forth) communication between the circuits. Therefore, clock sourcing requires two lines dedicated to the exchange of clock signal information. By contrast, and as can be seen in Figure 1, a shared clock signal method only requires a single clock line per clocked device (121, 122, 123), and provides a savings of one communication line at each of the circuits. Therefore, in shared or common clocked embodiments, an extra communication line is freed up to be used for other communication functions or data transfer.

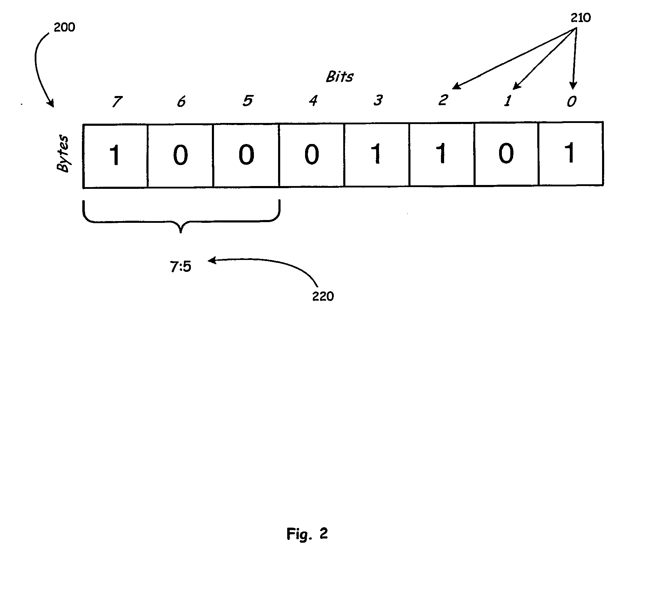

We now turn to the use of the communication buses 150 according to some embodiments of the invention. As mentioned earlier, a double-eight communication bus, such as the F8 bus, can be used to communicate digital information bits between two circuits or components. The communication is performed according to a pre-determined format so that the two communicating components may properly parse the significance of the information. As a preliminary step, a convention for illustrating and describing the information content is shown in Figure 2. An exemplary byte 200 is shown having 8 bits 210. The bits are designated sequentially from 0 to 7. Each bit (binary digit) carries a "0" or a "1" (or their equivalent) information. In the example, bit number 0 carries a "1" datum of information, bit number 1 carries a "0" datum of information, bit number 2 carries a "1" datum of information, etc. The entire 8-bit byte 200 carries the data "10001101." The bus 150 is usually "unconcerned" with the actual data it carries, and the communicating circuits are the elements that will parse and process the information sent and received over the bus. In the present description, a short hand notation 220 is used to indicate a group of bits carrying information of some significance. Figure 2 provides an example of a group of bits "100" carried in bit 7 through bit 5 of byte 200. This group of bits is indicated by the notation "7:5" or seven-through-five. This notation will be used below to describe the use of the bytes and what information is delivered in an exemplary F8 format.

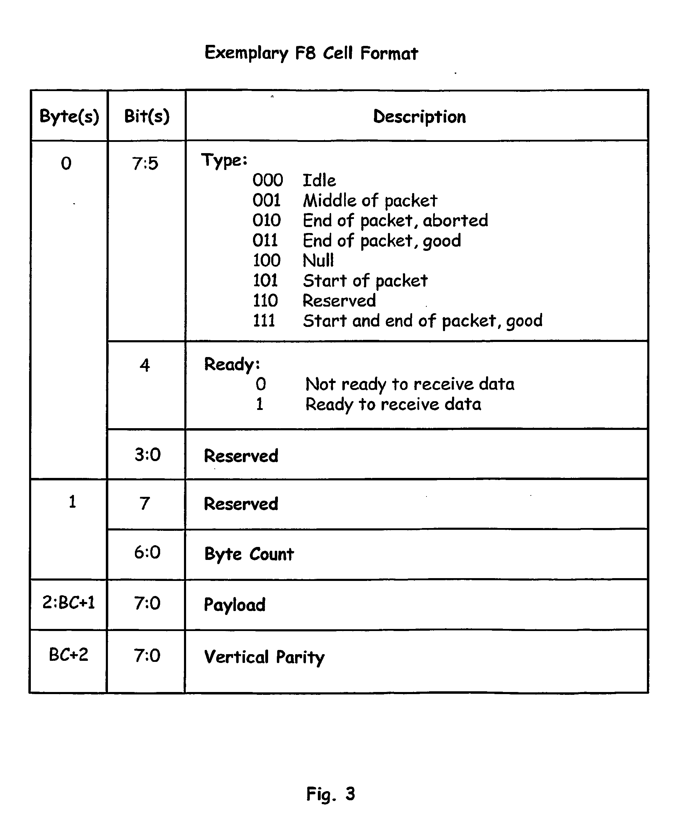

Figure 3 illustrates an exemplary format of a cell of information comprising several 8-bit bytes. Data strings, structures, and words of other size and other orderings of the information within the cell are possible and can be implemented by those skilled in the art. In the F8 example cell format, the first byte (byte 0) carries three pieces of information:
First, in bits 7:5, the type of cell. The figure shows several types of cell types that can be indicated by the 7:5 bits of byte 0. The are:

| | |
|---|---|
| 000 | Idle - the bus is not carrying information (is in an idle state) |
| 001 | Middle of packet - portions of a data packet precede and follow |
| 010 | End of packet, aborted packet |
| 011 | End of packet, good packet |
| 100 | Null - no payload present, for flow control uses |
| 101 | Start of packet |
| 110 | Reserved |
| 111 | Start and end of packet, good packet having only one cell |

Second, in bit number 4 of byte number 0, a "Ready" bit is carried. If the value of the Ready bit is "0" then the device is not ready to receive data from the bus. If the value of the Ready bit is "1" then the device is ready to receive data.

Third, bits 3:0 are reserved, and not used by the devices.

The next byte (byte 1) carries the Byte Count (BC), or number of bytes of payload data in the cell, in bits 6:0, with bit 7 being reserved. The byte count is an integer number, represented in a 7-bit binary format in the present example.

It should be appreciated that more than one byte may be used to signify the number of payload bytes in the cell. This could be used if the number of payload bytes is too large to be represented by the bits in a single Byte Count byte or portion thereof.

The final byte (number BC+2) is for vertical parity (VP). Parity bits are used for error checking. Errors arise in digital communication from a variety of sources. For example, electrical interference can cause a "0" bit to arrive at its destination as a "1" bit, or vice versa. A parity sense is adopted to check for flipped bits. Even vertical parity means that an even number of "1"s were packaged in a column of cells at its origin, and odd vertical parity means that an odd number of "1"s were packaged in a column of cells at its origin.

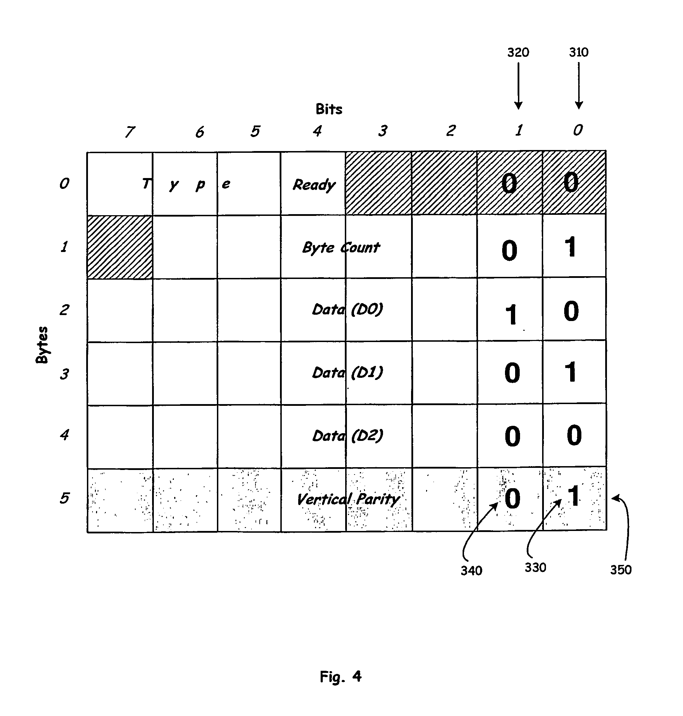

Figure 4 illustrates an exemplary F8 cell similar to that described above, having odd parity error checking. Data content of the first two columns 310, 320 are shown for illustrative purposes, while the rest of the cell's data values are not shown for simplicity. The last row 350 of cell 300 contains the VP bits. Bits 330 and 340 contain the VP bits for columns 310 and 320, respectively. Each VP bit is made to produce an odd total number of "1"s in its column. Hence, bit 330 is a "1" because its column contains two other "1"s, and a "1" is needed in VP bit location 330 to make the number of "1"s for column 310 equal 3, an odd number. Likewise, in column 320, VP bit 340 is made to be a "0" because the column 320 otherwise contains one "1" value, which is an odd number of "1"s. The VP bits in the other six positions of row 350 would similarly be made to be "0" or "1" as necessary to keep the total number of "1"s per column of the cell odd. If the figure was for an even parity configuration, the "1"s and "0"s of the VP row 350 would be interchanged.

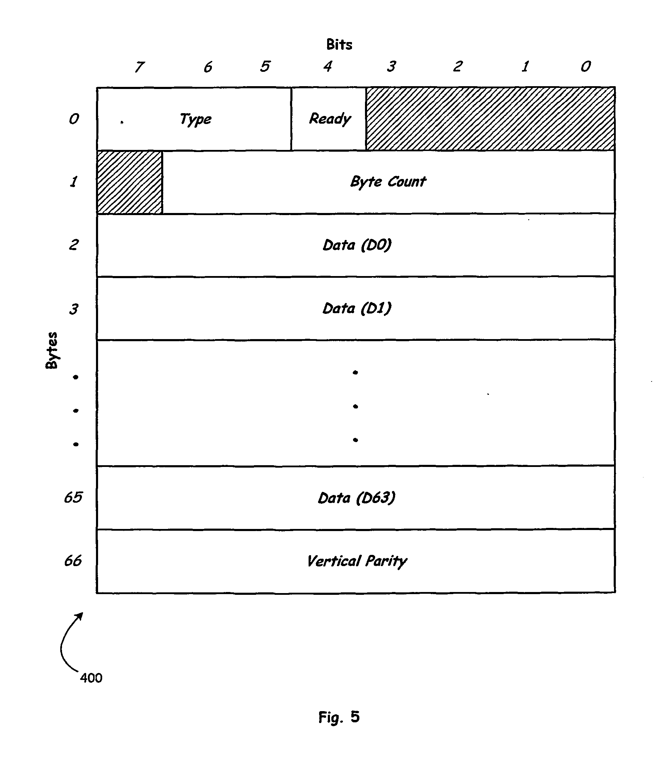

Figure 5 illustrates another F8 cell 400 according to the present exemplary format, showing blocks of bits in each byte of the cell signifying various content. The shaded blocks of bits are reserved or unused. The cell illustrated in Figure 5 includes 64 8-bit data (payload) bytes, D0...D63. In some embodiments, this number of payload bytes facilitates communication with components using the TDM format or IP packet format. Other embodiments could have less, more, or no payload cells.

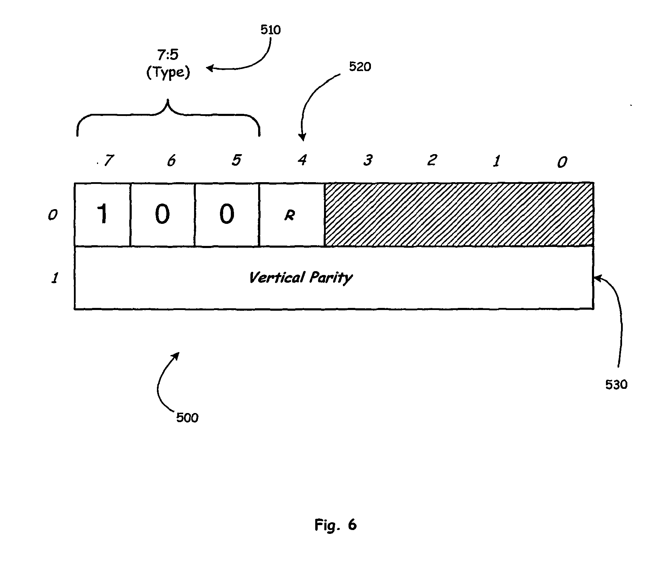

Figure 6 illustrates a "null" cell 500. Byte 0 includes the Type of cell in bits 7:5 as described previously. This type according to the example used is defined by bit values "100" in the 5:7 bits 510. The Ready bit 520 follows in bit 4 of byte 0. Byte 1 of null cell 500 is used for vertical parity. No payload data is carried in a null cell, but it does carry the Ready bit to indicate the availability of the device.

As described in the present disclosure and figures, new communication buses and methods for carrying data over the buses have been presented. In some aspects, shared clocking of interconnected devices provides a savings in lines used for clock signals to the devices. In other aspects, data cell formats including flow control functionality and being indicative of the type of data cell, including whether the data cell is a null cell are provided. In yet other aspects, the disclosure teaches a way to populate a data cell with binary information suitable for use with the F8 bus and compatible systems. The systems and methods include provisions for error checking using vertical parity, and improve the overall performance and pin/line availability to devices communicating over the bus lines. Therefore, increased functionality and lower cost can be achieved in digital communication systems using such buses.

Upon review of the present description, figures, and specific exemplary embodiments, it will be understood that modifications and equivalent substitutions may be performed in carrying out the invention without departing from the essence of the invention. Thus, the invention is not meant to be limited by the embodiments described explicitly above, rather it should be construed by the scope of the claims that follow.

## Claims

1. A method for transmitting packets from a first device (110) to a second device (130) over a bus (150) having a plurality of communication lines, wherein each packet comprises at least one digital data cell (400), the method comprising:
providing at least one ready bit in the digital data cell (400) to indicate whether the first device (110) is ready to receive data from the bus; and
providing at least one vertical parity bit in the digital data cell (400) for checking for error conditions in the digital data cell (400), **characterized by** further comprising
providing a combination of type bits in the digital data cell (400) to indicate either the position of the digital data cell (400) in a packet or that the digital data cell (400) is carrying no payload bits therein;
wherein at least one of the plurality of communication lines of the bus (150) is configured to transmit both payload and type bits.

2. The method of claim 1, wherein the combination of type bits is used for flow control.

3. The method of claim 1, further comprising providing at least one byte of data in the digital data cell (400) for carrying an information payload across the bus (150).

4. The method of claim 3, further comprising providing at least one bit of data in the digital data cell (400) to indicate a number of bytes of data carrying an information payload.

5. The method of claim 1, further comprising clocking the first (110) and second devices (130) using a common clock signal.

6. A system for transmitting digital data cells (400) from a first device (110) to a second device (130), comprising:
a communication bus (150) having a plurality of communication lines, the communication bus (150) coupled at a first end thereof to the first device (110) and coupled at a second end thereof to the second device (130) ;
the communication bus (150) providing at least one bit of data of the digital data cell (400) to indicate whether the first device (110) coupled to the communication bus (150) is ready to receive data from the communication bus (150); and the communication bus (150) providing vertical parity bits of the digital data cell (400) for checking for error conditions in the digital data cell (400);
the communication bus (150) **characterized by** providing combination of type bits of the digital data cell (400) that indicate either the position of the digital data cell (400) in a packet or that the digital data cell (400) is carrying no payload bits therein; and
wherein at least one of the plurality of communication lines of the communication bus (150) is configured to transmit both payload and type bits.

7. The system of claim 6, further comprising a clock input line of the first device (110), the clock input line providing a clock signal that is shared with a clock input line of the second device (130).

8. The system of claim 6, wherein the combination of type bits is used for flow control.

9. The system of claim 6, wherein the system is constructed as part of an integrated circuit for use in a communication computer system.

10. The system of claim 9, wherein the system receives communication data according to a communication standard format.

## Patentansprüche

1. Verfahren zum Übertragen von Paketen von einer ersten Vorrichtung (110) zu einer zweiten Vorrichtung (130) über einen Bus (150), der eine Vielzahl von Kommunikationsleitungen aufweist, wobei jedes Paket zumindest eine digitale Datenzelle (400) umfasst, wobei das Verfahren umfasst:
Bereitstellen von zumindest einem Fertig-Bit in der digitalen Datenzelle (400), um anzuzeigen ob die erste Vorrichtung (110) bereit ist, Daten von dem Bus zu empfangen; und
Bereitstellen von zumindest einem vertikalen Paritätsbit in der digitalen Datenzelle (400) zur Überprüfung auf Fehlerzustände in der digitalen Datenzelle (400), **dadurch gekennzeichnet, dass** es weiterhin umfasst:
Bereitstellen einer Kombination von Typen-Bits in der digitalen Datenzelle (400), um entweder die Position der digitalen Datenzelle (400) in einem Paket anzuzeigen, oder dass die digitale Datenzelle (400) keine Nutz-Bits in sich trägt;
wobei zumindest eine der Vielzahl von Kommunikationsleitungen des Busses (150) dazu konfiguriert ist, sowohl Nutz- als auch Typen-Bits zu übertragen.

2. Verfahren nach Anspruch 1, wobei die Kombination der Typen-Bits zur Flusskontrolle verwendet wird.

3. Verfahren nach Anspruch 1, weiterhin umfassend Bereitstellen von zumindest einem Datenbyte in der digitalen Datenzelle (400), um eine Informations-Nutzlast über den Bus (150) zu transportieren.

4. Verfahren nach Anspruch 3, weiterhin umfassend Bereitstellen von zumindest einem Datenbit in der digitalen Datenzelle (400), um eine Anzahl von Datenbytes anzuzeigen, die eine Informations-Nutzlast tragen.

5. Verfahren nach Anspruch 1, weiterhin umfassend das Takten der ersten (110) und zweiten Vorrichtung (130) unter Verwendung eines gemeinsamen Taktsignals.

6. Verfahren zum Übertragen digitaler Datenzellen (400) von einer ersten Vorrichtung (110) zu einer zweiten Vorrichtung (130), umfassend:
einen Kommunikationsbus (150), der eine Vielzahl von Kommunikationsleitungen aufweist, wobei der Kommunikationsbus (150) an seinem ersten Ende mit der ersten Vorrichtung (110) verbunden ist und an seinem zweiten Ende mit der zweiten Vorrichtung (130) verbunden ist;
wobei der Kommunikationsbus (150) zumindest ein Datenbit der digitalen Datenzelle (400) aufweist, um anzuzeigen, ob die mit dem Kommunikationsbus (150) verbundene erste Vorrichtung (110) bereit ist, Daten von dem Kommunikationsbus (150) zu empfangen; und der Kommunikationsbus (150) vertikale Paritätsbits der digitalen Datenzelle (400) zur Überprüfung auf Fehlerzustände in der digitalen Datenzelle (400) aufweist;
wobei der Kommunikationsbus (150) **gekennzeichnet ist durch** Bereitstellen einer Kombination von Typen-Bits in der digitalen Datenzelle (400), die entweder die Position der digitalen Datenzelle (400) in einem Paket anzeigen, oder dass die digitale Datenzelle (400) keine Nutz-Bits in sich trägt; und
wobei zumindest eine der Vielzahl von Kommunikationsleitungen des Kommunikationsbusses (150) dazu konfiguriert ist, sowohl Nutz- als auch Typen-Bits zu übertragen.

7. System nach Anspruch 6, weiterhin umfassend eine Takteingangsleitung der ersten Vorrichtung (110), wobei die Takteingangsleitung ein Taktsignal bereitstellt, das mit einer Takteingangsleitung der zweiten Vorrichtung (130) geteilt wird.

8. System nach Anspruch 6, wobei die Kombination der Typen-Bits zur Flusskontrolle verwendet wird.

9. System nach Anspruch 6, wobei das System als Teil eines integrierten Schaltkreises zur Verwendung in einem Kommunikations-Computersystem ausgestaltet ist.

10. System nach Anspruch 9, wobei das System Kommunikationsdaten gemäß einem Kommunikations-Standardformat empfängt.

## Revendications

1. Procédé pour transmettre des paquets d'un premier dispositif (110) à un deuxième dispositif (130) sur un bus (150) comportant une pluralité de lignes de communication, dans lequel chaque paquet comprend au moins une cellule de données numériques (400), le procédé comprenant :
la délivrance d'au moins un bit prêt dans la cellule de données numériques (400) pour indiquer si oui ou non le premier dispositif (110) est prêt à recevoir des données à partir du bus ; et
la délivrance d'au moins un bit de parité verticale dans la cellule de données numériques (400) pour vérifier des conditions d'erreur dans la cellule de données numériques (400), **caractérisé en ce qu'**il comprend de plus :
la délivrance d'une combinaison de bits de type dans la cellule de données numériques (400) pour indiquer soit la position de la cellule de données numériques (400) dans un paquet soit le fait que la cellule de données numériques (400) ne porte aucun bit de charge utile à l'intérieur de celle-ci ;
dans lequel au moins l'une de la pluralité de lignes de communication du bus (150) est configurée de façon à transmettre à la fois des bits de charge utile et de type.

2. Procédé selon la revendication 1, dans lequel la combinaison de bits de type est utilisée pour une commande de circulation.

3. Procédé selon la revendication 1, comprenant de plus la délivrance d'au moins un octet de données dans la cellule de données numériques (400) pour acheminer une charge utile d'information sur le bus (150).

4. Procédé selon la revendication 3, comprenant de plus la délivrance d'au moins un bit de données dans la cellule de données numériques (400) pour indiquer un nombre d'octets de données portant une charge utile d'information.

5. Procédé selon la revendication 1, comprenant de plus un séquencement des premier (110) et deuxième (130) dispositifs à l'aide d'un signal d'horloge commun.

6. Système pour transmettre des cellules de données numériques (400) d'un premier dispositif (110) à un deuxième dispositif (130), comprenant :
un bus de communication (150) comportant une pluralité de lignes de communication, le bus de communication (150) étant couplé à une première extrémité de celui-ci au premier dispositif (110) et couplé à une deuxième extrémité de celui-ci au deuxième dispositif (130) ;
le bus de communication (150) délivrant au moins un bit de données de la cellule de données numériques (400) afin d'indiquer si oui ou non le premier dispositif (110) couplé au bus de communication (150) est prêt à recevoir des données à partir du bus de communication (150) ; et le bus de communication (150) délivrant des bits de parité verticale de la cellule de données numériques (400) pour vérifier des conditions d'erreur dans la cellule de données numériques (400) ;
le bus de communication (150) étant **caractérisé par** la délivrance d'une combinaison de bits de type de la cellule de données numériques (400) qui indique soit la position de la cellule de données numériques (400) dans un paquet soit le fait que la cellule de données numériques (400) ne porte aucun bit de charge utile à l'intérieur de celle-ci ; et
dans lequel au moins l'une de la pluralité de lignes de communication du bus de communication (150) est configurée de façon à transmettre à la fois des bits de charge utile et de type.

7. Système selon la revendication 6, comprenant de plus une ligne d'entrée d'horloge du premier dispositif (110), la ligne d'entrée d'horloge délivrant un signal d'horloge qui est partagé avec une ligne d'entrée d'horloge du deuxième dispositif (130).

8. Système selon la revendication 6, dans lequel la combinaison de bits de type est utilisée pour une commande de circulation.

9. Système selon la revendication 6, dans lequel le système est construit sous la forme d'une partie d'un circuit intégré pour l'utilisation dans un système informatique de communication.

10. Système selon la revendication 9, dans lequel le système reçoit des données de communication selon un format de norme de communication.
